# EUROPÄISCHE PATENTANMELDUNG

(11) **EP 0 564 982 A2**
(43) Veröffentlichungstag der Anmeldung: **13.10.1993**
(21) Anmeldenummer: 93105422.5
(22) Anmeldetag: 01.04.1993
(51) Int. Cl.: C04B 35/10

(54) **Keramischer Formkörper aus Aluminiumoxid mit hoher Metallisierungshaftfestigkeit**

(30) Priorität: 04.04.1992 DE 4211418
(71) Anmelder: Hoechst CeramTec Aktiengesellschaft, D-95100 Selb (DE); PHILIPS ELECTRONICS N.V., 5621 BA Eindhoven (NL)
(72) Erfinder: Krahn, Wolfgang, Dr., W-8590 Marktredwitz (DE); Ruska, Jürgen, Dr., W-8672 Selb (DE); Schat, Bralt R., NL-5624 JR Eindhoven (NL)
(74) Vertreter: Hoffmann, Peter, Dipl.-Chem.

(57) **Zusammenfassung**

Keramische Formkörper aus Aluminiumoxid, mit einem Anteil an interkristallinem Bruch von mehr als 50 %, einem mittleren Porenradius von mehr als 4 µm und einer Porosität von mehr als 2 % werden erhalten durch:
a) Mahlen von Aluminiumoxid mit einem Reingehalt von mindestens 99,5 % und einer durchschnittlichen Primärkristallgröße von 1 bis 4 µm zu einer mittleren Fragmentgröße von 2 bis 7 µm,
b) Zugabe einer Magnesiumoxid-, Siliciumoxid- und Calciumoxid-Quelle in solchen Mengen, daß der Gehalt an Magnesiumoxid 0,2 bis 2,5 %, an Siliciumdioxid 1 bis 6 % und an Calciumoxid 0,1 bis 2,5 %, jeweils bezogen auf die Menge an Al₂O₃, beträgt,
c) Formung eines Grünkörpers und
d) Sinterung.

## Beschreibung

Keramische Formkörper werden auf Grund ihrer günstigen Eigenschaften wie hohe Druck- und Biegefestigkeit, geringes spezifisches Gewicht, hohe Korrosionsbeständigkeit, hohe Einsatztemperaturen, niedrige Wärmedehnung, sehr gutes elektrisches Isolationsvermögen in immer steigendem Ausmaß in verschiedenen Produkten, unter anderem auch für die Herstellung von Bauteilen für die Elektroindustrie eingesetzt. Die Verwendung als Bauteil macht es erforderlich, daß die Keramik mit Werkstoffen anderer Art, insbesondere mit Metallen fest verbunden wird.

Hierzu wird üblicherweise die Keramikoberfläche zunächst metallisiert, etwa durch stromloses Vernickeln. Diese Nickel-Schicht kann dann durch galvanisches Vernickeln weiter verstärkt werden. Auf diese Schicht können dann zur Gewährleistung einer guten Verlötung mit Metallteilen weitere Metallschichten abgeschieden werden. Es versteht sich, daß bei diesem Verbund von Keramik und Metall die Haftfestigkeit der Verbundpartner von entscheidender Bedeutung ist.

Als Beschichtungstechniken kommen grundsätzlich neben der stromlosen Metallabscheidung auch andere chemische oder galvanische Verfahren, Chemical Vapor Deposition, Physical Vapor Deposition, Sputtern, Plasmaspritzen und alle übrigen dem Fachmann bekannten Techniken in Betracht.

Aufgabe der vorliegenden Erfindung ist die Herstellung von keramischen Formkörpern aus Al₂O₃ die nach einer Metallisierung eine gegenüber dem Stand der Technik verbesserte Haftfestigkeit der Verbundpartner aufweisen. Als Verbindungspartner sind neben Metallen natürlich auch Metallegierungen, Gläser, keramische Beschichtungen oder organische Verbindungen wie Polymere möglich.

Die Aufgabe wird dadurch gelöst, daß man einen Werkstoff herstellt, der bei Bearbeitung eine gute Oberfläche oder bei Trennung eine Bruchfläche ergibt, die gute Verankerungsmöglichkeiten für abgeschiedene Beschichtungsmaterialien wie beispielsweise Metalle bietet. Die gezielte Einstellung spezieller Merkmale der Verbindungsfläche ist insofern von Bedeutung, da die Verbindung von Kermiken mit anderen Materialien oft im wesentlichen mechanischer Natur mit Kraft- und Formschluß ist und chemische Bindungsanteile praktisch keine Rolle spielen.

Die Einstellung einer gut strukturierten Verbindungsfläche mit guten Verankerungsmöglichkeiten gelingt durch das Einbringen von Poren, ihrer Anzahl, Größe und Form, durch die Umlenkung des Bruchverlaufs vom transkristallinen hin zum interkristallinen Bruch und durch herauslösbare Zweitphasen, die zum Beispiel durch Ätzbehandlungen leicht entfernbar sind.

Werden Poren in der Keramik mit Verbindungsmaterial ausgefüllt, so bilden sie eine Vielzahl von Verankerungsstellen für das Beschichtungsmaterial. Zur Abtrennung des Verbindungspartners von der Keramik müssen diese Verankerungen aus den Poren herausgezogen oder durchgerissen werden, wobei besonders effektiven Widerstand hiergegen hintergriffige Poren, das sind Poren mit etwas kleinerem Öffnungsdurchmesser in der Trennfläche als ihr Gesamtdurchmesser, leisten werden.

Porengröße und Porenanzahl kann unter anderem durch eine Mahlung der Ausgangsrohstoffe auf eine spezifische Korngrößenverteilung eingestellt werden. Vorteilhaft ist es hier, die Ausgangsrohstoffe nicht vollständig auf ihre gewachsenen Einzelkörner herab zu zerkleinern, sondern auch Fragmente von Rohstoffagglomeraten zu erzeugen, die ihrerseits noch aus mehreren Einzelkörnern bestehen. Der Vorteil dieser Verfahrensweise besteht darin, daß die Oberflächen derartiger Partikel in sehr unregelmäßigen Krümmungen verlaufen und deshalb bei der Anlagerung der Fragmente im Grünkörper relativ große Hohlräume erhalten werden können, die sich dann beim Sinterbrand nur schlecht schließen. Günstig ist auch die Reduzierung des Feinkornanteils, weil dadurch weniger oft kleine Teilchen die von den Fragmenten gebildeten Hohlräume ausfüllen werden. Porengröße und Porenanzahl sind ferner einstellbar durch die Auswahl und Verteilung der Sinteradditive und durch die Steuerung des Schwindungsprozesses beim Brand. Eine gut geeignete Verbindungsfläche muß nun neben Poren weitere Haftungsmechanismen anbieten. Hierzu kann die Ausbildung einer Oberfläche mit möglichst vielen Richtungswechseln einen wertvollen Beitrag leisten. Bearbeitet oder trennt man die Keramik, so kann mikrostrukturell gesteuerter Trennverlauf die Oberflächenstruktur der Trennfläche maßgeblich beeinflussen. Dieser Trennflächenverlauf sollte deshalb vorzugsweise intergranular, d.h. entlang der Einzelkorngrenzflächen sein. Nachteilig ist dagegen ein transgranularer, die Einzelkörner aufspaltender Bruch. Die effektive Trennfläche kann beim interkristallinen Bruchverlauf ein Mehrfaches der wirksamen Trennfläche als beim transgranularen Bruch sein. Durch die Vielzahl der Richtungswechsel in der Verbindungsfläche wird eine Ablösung der Gegenschicht durch Zug- oder Scherkräfte erschwert, weil diese Kräfte in der Trennfläche selbst ständig ihre Richtung wechseln müßten. Die Steuerung des Bruchverlaufs vom transkristallinen zum interkristallinen Bruch läßt sich bei mehrphasigen Keramikwerkstoffen vorteilhaft durch die Wahl geeigneter Zweitphasen oder Korngrenzphasen steuern.

Der dritte Beitrag des keramischen Werkstoffs zur Ermöglichung gut strukturierter Trennf lächen besteht darin, daß durch Ätzverfahren Materialabtrag speziell von Zweitphasen in solchen Mengen ermöglicht wird, daß sich tiefere Rinnen und Gräben zwischen den Kristalliten der Primärphase ausbilden können. Auch derartige Ätzfurchen bewirken weitere Richtungsänderungen in der Mikrostruktur der Trennfläche und können somit zusätzliche Haftstellen für das Verbindungsmaterial anbieten.

Erfindungsgemäß werden Formkörper mit diesen Eigenschaften erhalten, indem man Aluminiumoxid in einer geeigneten Mühle auf eine bestimmte durchschnittliche Teilchengröße und Kornverteilung mit reduziertem Feinkornanteil mahlt und diesem Aluminiumoxid bestimmte Mengen an Sinterhilfsmittel zugibt, wobei hier vorzugsweise magnesiumoxid- calciumoxid- und siliciumoxidhaltige Komponenten bzw. die entsprechenden Reinstoffe eingesetzt werden.

Gegenstand der Erfindung sind somit keramische Formkörper aus Aluminiumoxid, mit einem Anteil an interkristallinem Bruch von mehr als 50 %, einem mittleren Porenradius von mehr als 4 µm und einer Porosität von mehr als 2 %, erhalten durch:
a) Mahlen von Aluminiumoxid mit einem Reingehalt von mindestens 99,5 % und einer durchschnittlichen Primärkristallgröße von 1 bis 4 µm zu einer mittleren Fragmentgröße von 2 bis 7 µm,
b) Zugabe einer Magnesiumoxid-, Siliciumoxid- und Calciumoxid-Quelle in solchen Mengen, daß der Gehalt an Magnesiumoxid 0,2 bis 2,5 %, vorzugsweise 0,4 bis 1 %, an Siliciumdioxid 1 bis 6 %, vorzugsweise 2 bis 4 %, und an Calciumoxid 0,1 bis 2,5 %, vorzugsweise 0,8 bis 2 %, jeweils bezogen auf die Menge an Al₂O₃, beträgt,
c) Formung eines Grünkörpers und
d) Sinterung.

Zur Herstellung der erfindungsgemäßen Keramikkörper wird zunächst handelsübliche Tonerde mit einem Aluminiumoxidgehalt von mindestens 99,5 % und einer durchschnittlichen Primärkorngröße von 1 bis 4 µm auf eine mittlere Partikelgröße von 2 bis 7 um aufgemahlen. Die Primärkorngröße ist als die Größe des gewachsenen Einzelkristallits im Tonerdeagglomerat definiert und kann beispielsweise durch rasterelektronenmikroskopische Untersuchung nicht gemahlener Tonerdepulver bestimmt werden. Die mittlere Fragmentgröße der gemahlenen Tonerde wird dagegen in wässriger Suspension nach dem Prinzip der Laserlichtstreuung mit dem Lasergranulometer SILAS HR 850 ermittelt. Besonders vorteilhaft ist die Einstellung eines Korngrößenspektrums mit reduziertem Feinkornateil und die Erzeugung von möglichst unregelmäßigem Kristallithabitus. Dies gelingt durch die Wahl eines geeigneten Mahlverfahrens, das verfahrensbedingt weniger Feinkornanteil zu erzeugen vermag und die Bildung von eher splittrigem Korn begünstigt. Ein geeignetes Verfahren ist beispielsweise die Pulveraufbereitung in einer Luftstrahlmühle mit nachgeschalteter Sichtung des Mahlgutes.

Die als Sinterhilfsmittel benötigten Substanzen, die die Anteile an MgO, SiO₂ und CaO liefern, können bereits vor oder während des Mahlvorgangs zugegeben werden. Vorzugsweise arbeitet man jedoch in der Weise, daß man diese Sinterhilfsmittel separat mahlt und erst vor oder während der sogenannten Dispergierung zum gemahlenen Aluminiumoxid zugibt. Als Sinterhilfsmittelkommen im Rahmen der Efindung alle Minerale in Frage, die beim abschließenden Sintern Magnesiumoxid, Siliciumoxid und Calciumoxid ergeben. Beispiele für solche Minerale sind Talk, Magnesiumcarbonat, basisches Magnesiumcarbonat` Calciumsilikat, Calciumcarbonat. Als Quelle für MgO und SiO₂ lassen sich auch unmittelbar Magnesiumoxid und Siliciumdioxid einsetzen.

Die Mahlung der Sinterhilfsmittel erfolgt üblicherweise in wässriger Suspension. Nach dem Mahlen wird das Wasser entfernt, in der Regel durch Sprühtrocknen. Sowohl die sprühgetrockneten Sinterhilfsmittel als auch die aufbereitete Tonerde werden dann gemeinsam in an sich bekannter Weise mit geeigneten organischen Lösemitteln und/oder Dispergiermitteln, Bindemitteln, Weichmachern und Entschäumern durch Mahlen zu einer Dispersion (Schlicker) verarbeitet. Vorzugsweise erfolgt dieser Dispergiervorgang in zwei Stufen, indem zunächst die Tonerde nur mit dem Lösemittel und dem Dispergiermittel dispergiert wird. In einem zweiten Mahlvorgang erfolgt dann die Zugabe der Bindemittel und eventueller anderer Additive. Falls nicht bereits bei der ersten Mahlung der Tonerde geschehen, kann bei dieser Dispergierung die Zugabe der bereits gemahlenen Sinterhilfsmittel erfolgen.

Der auf diese Weise erhaltene Schlicker wird nach üblichen Formgebungsverfahren verarbeitet, beispielsweise durch Eingießen in eine Gipsform bei wäßrigem Schlicker oder durch Vergießen zu einem Band, aus dem nach einem nachgeschalteten Trocknungsschritt die Bauteile gestanzt werden. Bei dieser Formgebung ist es von Vorteil, wenn den Grünteilen v-förmige Kerben eingeprägt werden. Nach dem Sintern wird das Keramikmaterial entlang dieser Kerben gebrochen. Man erhält dabei Bauteile, die eine stark strukturierte Bruchfläche durch Poren und intergranularen Bruchverlauf aufweisen. Dieser intergranulare Bruchverlauf leistet gemeinsam mit der eingebrachten Porenstruktur einen wesentlichen Beitrag für die bessere Haftung zu einer darauf aufgetragenen Metallisierung.

Die Formgebung kann auch durch Trockenpressung der Mischung aus dem fein gemahlenen und getrockneten Aluminiumoxid und den Metalloxiden (Sinterhilfsmitteln) nach an sich bekannten Verfahren erfolgen.

Der nach der Formgebung erhaltene Grünkörper wird abschließend unter üblichen Bedingungen bei Temperaturen im Bereich von 1500 bis 1650 °C gesintert. Die so erhaltenen Bauteile werden dann gegebenenfalls nach üblichen Verfahren mechanisch oder chemisch an den Ober- oder Bruchflächen behandelt und zumindest teilweise nach üblichen Verfahren metallisiert, beispielsweise durch ein stromloses oder galvanisches Vernickeln, wonach noch das Aufbringen weiterer Metallschichten, beispielsweise Cu-, Ag- und/oder Au-Schichten erfolgen kann.

Besonders vorteilhaft ist eine Anätzung der Keramikoberfläche vor der Metallisierung beispielsweise mit Flußsäure, um so eine neue Oberfläche mit verbesserter Haftung gegenüber der Metallisierungsschicht zu erreichen.

Die erfindungsgemäßen keramischen Formkörper zeichnen sich durch eine verbesserte Haftung an der Grenzfläche Keramik/Metallisierungsschicht aus, wie aus den Meßwerten für die Festigkeit in den nachfolgenden Ausführungsbeispielen hervorgeht.

### Beispiel 1 (Vergleichsversuch)

In einer Trommelmühle werden 1708 Gew.-Teile einer nicht vorgemahlenen Tonerde mit einer durchschnittlichen Primärkorngröße von 2,8 bis 3,2 µm zusammen mit 37,8 Gew.-Teilen Speckstein (Talk), 36,0 Gew.-Teilen Kaolin, 7,2 Gew.-Teilen Wollastonit und 11,0 Gew.-Teilen basischem Magnesiumcarbonat unter Zusatz von 2000 Gew.-Teilen Mahlkörpern aus 92 % Aluminiumoxid (Zylinder ⌀ 20 mm) und 1100 Vol.-Teilen Wasser so aufgemahlen, daß sich eine Korngrößenverteilung mit einem d₅₀-Wert von 2,9 µm, einem d₁₀-Wert von 0,6 µm und einem d₉₀-Wert von 6,0 µm einstellt. Der so erhaltene Schlicker wird anschließend sprühgetrocknet.

In einer Trommelmühle, gefüllt mit 60 Gew.-Teilen Mahlkörpern (Zylinder ⌀ < 20 mm), werden 140 Gew.-Teile dieses Sprühkorns in 48 Gew.-Teilen eines Lösemittelgemisches aus Trichlorethen und Ethanol unter Zusatz von 1,4 Gew.-Teilen Fischöl über einen Zeitraum von 46 Stunden dispergiert. Anschließend werden 8,4 Gew.-Teile eines Gemisches aus Polyvinylbutyral, Dioctylphthalat und Polyethylenglykol in die Trommelmühle zu den dispergierten keramischen Pulvern zugegeben, und es wird über eine Zeitspanne von 23 Stunden gemahlen.

Die Viskosität des derart hergestellten Gießschlickers beträgt in der Mahltrommel ca. 4000 cP (bei 21 °C). Der Schlicker wird auf einem mit Trennmittel benetzten Endlosstahlband mit einer Geschwindigkeit von 0,75 m/min zu einer Folie mit einer Schichtdicke von 0,64 mm vergossen und dann auf einer Länge von ca. 30 m in einem von ca. 20 °C auf ca. 80 °C steigenden Temperaturgradienten zu einer Grünfolie getrocknet, die anschließend in Streifen geschnitten und auf Rollen gewickelt wird.

Aus den Folienstreifen werden durch Stanzen und Kerben die grünen Substrate geformt, die mit einem nicht reaktiven, oxidischen Granulat als Trennmittel beschichtet und mehrlagig bei 1580 °C gesintert werden. Nach dem Sinterbrand wird das Trennpulver abgebürstet, und die Substrate werden zur Glättung bei 1300 °C nachgetempert.

Zur Bestimmung der Haftfestigkeit einer Metallisierung in der Bruchfläche werden die Substrate anschließend entlang der eingebrachten Kerbe gebrochen. Nach einigen Minuten einer Ätzbehandlung in einem Flußsäurebad wird an der Bruchfläche zunächst stromlos Nickel bis zu einer Schichtdicke ≦ 0,1 µm abgeschieden. In einem darauf folgenden galvanischen Prozeßschritt wird die Dicke der Nickelschicht bis auf 5 µm verstärkt. Zur Erzielung einer guten Lötbarkeit wird schließlich noch eine Zinn-Bleischicht galvanisch abgeschieden.

Zwei derart vorbereitete Proben werden durch Löten direkt miteinander verbunden und dann einem Zugversuch unterworfen. Der aus einer genügend großen Probenzahl bestimmte Mittelwert für die Festigkeit des Metall-Keramikverbundes ist 25 MPa.

### Beispiel 2 (Vergleichsversuch zum Einfluß der Porenstruktur)

In einer Fließbettgegenstrahlmühle (Type AFG 400; Hersteller Fa. Alpine, Augsburg) wird eine nicht vorgemahlene Tonerde mit einer vom Lieferanten angegebenen durchschnittlichen Einzelkorngröße von 2 bis 3 µm derart aufgemahlen, daß sich eine Korngrößenverteilung mit einem d₅₀-Wert von 4,4 µm, einem d₁₀-Wert von 1,2 µm und einem d₉₀-Wert von 9,1 µm einstellt.

In einer Trommelmühle, gefüllt mit 60 Gew.-Teilen Mahlkörpern aus 92 %-igem Aluminiumoxid (Zylinder ⌀ 20 mm), werden 133 Gew.-Teile der gemahlenen Tonerde mit 48 Gew.-Teilen eines Lösemittelgemisches aus Trichlorethen und Ethanol unter Zusatz von 1,4 Gew.-Teilen Fischöl und 7 Gew.-Teilen eines aus verschiedenen Sinterhilfsmitteln bestehenden Sprühgranulats über eine Zeit von 46 Stunden dispergiert. Dieses Sprühgranulat wird separat durch eine Mahlung von 462 Gew.-Teilen Speckstein, 440 Gew-Teilen Kaolin, 87 Gew.-Teilen Wollastonit und 132 Gew.-Teilen basischem Magnesiumcarbonat in einer mit 2000 Gew.-Teilen Mahlkörpern (Zylinder ⌀ 20 mm) und 1400 Vol.-Teilen Wasser beschickten Trommelmühle mit anschließender Sprühtrocknung hergestellt.

Nach dem Dispergierschritt werden 8,4 Gew.-Teile eines Gemisches aus Polyvinylbutyral, Dioctylphthalat und Polyethylenglykol in die Trommelmühle zu den dispergierten Keramikpulvern gegeben, und es wird über eine Zeitdauer von weiteren 23 Stunden gemahlen.

Die weitere Verarbeitung zum keramischen Substrat und die nachfolgende Herstellung des Verbundes Keramik-Metall in der Keramikbruchfläche folgt dem in Beispiel 1 dargelegten Weg. In diesem Beispiel wird beim Ziehtest eine durchschnittliche Festigkeit des Keramik-Metallverbundes von 45 MPa erreicht.

### Beispiel 3 (erfindungsgemäß)

### Einfluß der Kombination Porenstruktur plus intergranularer Bruch (durch vermehrten Erdalkalizusatz)

In einer Fließbettgegenstrahlmühle (Type AFG 400) wird eine nicht vorgemahlene Tonerde mit einer vom Hersteller angegebenen durchschnittlichen Einzelkorngröße von 2,8 bis 3,2 µm so aufgemahlen, daß man eine Korngrößenverteilung mit einem d₅₀-Wert von 4,0 µm, einem d₁₀-Wert von 1,0 µm und einem d₉₀-Wert von 7,5 µm erhält.

130,8 Gew.-Teile der so gemahlenen Tonerde werden in einer Trommelmühle mit 49,4 Gew.-Teilen des in Beispiel 1 angegebenen Löse- und Dispergiermittelgemisches unter Zusatz von 12,2 Gew.-Teilen eines aus den Sinterhilfsmitteln bestehenden Sprühgranulats über eine Zeit von 46 Stunden dispergiert. Diese Sinterhilfsmittel werden separat durch eine Mahlung von 274 Gew.-Teilen Speckstein, 457 Gew.-Teilen Kaolin, 92 Gew.-Teilen basischem Magnesiumcarbonat und 300 Gew.-Teilen Calciumcarbonat in einer mit 2000 Gew.-Teilen Mahlkörpern gefüllten Trommelmühle unter Zusatz von 1400 Vol.-Teilen Wasser mit abschließender Sprühtrocknung des Schlickers hergestellt. Nach dem Dispergierschritt werden 8,4 Gew.-Teile des in Beispiel 1 angegebenen Binder- und Weichmachergemisches zugesetzt, und es wird weitere 23 Stunden lang gemahlen.

Die Verarbeitung zum keramischen Substrat und die nachfolgende Herstellung des Verbundes Keramik-Metall in der Keramikbruchfläche folgt dem in Beispiel 1 dargelegten Weg. Beim Ziehtest ergab sich eine mittlere Festigkeit von 55 MPa.

### Beispiel 4 (erfindungsgemäß)

129 Gew.-Teile einer analog zu Beispiel 3 aufbereiteten Tonerde werden mit 49,4 Gew.-Teilen des in Beispiel 1 angegebenen Löse- und Dispergiermittelgemisches unter Zusatz von 15,4 Gew.-Teilen eines aus den Sinterhilfsmitteln bestehenden Sprühgranulats über einen Zeitraum von 46 Stunden dispergiert. Die Sinterhilfsmittel werden durch die Mahlung von 122 Gew.-Teilen Speckstein, 591 Gew.-Teilen Kaolin, 72 Gew.-Teilen basischem Magnesiumcarbonat und 346 Gew.-Teilen Calciumcarbonat in einer mit 2000 Gew.-Teilen Mahlkörpern gefüllten Trommelmühle unter Zusatz von 1400 Vol.-Teilen Wasser mit Sprühtrocknung des Schlickers hergestellt.

Der weitere Verarbeitungsverlauf über Gießschlickerherstellung, Gießprozeß, Formgebung, keramischen Brand mit anschließender Herstellung eines Verbundes Keramik-Metall in der Bruchoberfläche folgt dem in Beispiel 1 dargelegten Weg. Beim Ziehtest ergab sich eine mittlere Festigkeit von 61 MPa.

Die an Probekörpern der Ausführungsbeispiele gemessenen weiteren physiklaischen Eigenschaften sind in der nachfolgenden Tabelle gegenübergestellt. Dabei wurden die folgenden Meßmethoden angewandt:
- Die Porosität der Probekörper wurde über die Bestimmung der Dichte durch Auftriebsmessung ermittelt.
- Der Anteil an interkristallinem Bruch an der Bruchfläche wurde durch optische Untersuchung des Bruches entlang der Kerbe bei 1000- bis 1500-facher Vergrößerung am Rasterelektronenmikroskop bestimmt.
- Der mittlere Porenradius wurde durch Anfertigung eines Schliffes und durch optische Analyse des Schliffbildes definiert.

**TABELLE**

| Beispiel | 1 | 2 | 3 | 4 |
|---|---|---|---|---|
| Porosität [%] | 4,2 | 7,2 | 6,5 | 7,9 |
| Interkristalliner Bruch [%] | ≦30 | ≦30 | >70 | >70 |
| Mittlerer Porendurchmesser [µm] | 2,8 | 5,3 | 5,1 | 5,7 |

## Patentansprüche

1. Keramische Formkörper aus Aluminiumoxid mit einem Anteil an interkristallinem Bruch von mehr als 50 %, einem mittleren Porenradius von mehr als 4 µm und einer Porosität von mehr als 2 %, erhalten durch:
a) Mahlen von Aluminiumoxid mit einem Reingehalt von mindestens 99,5 % und einer durchschnittlichen Primärkristallgröße von 1 bis 4 µm zu einer mittleren Fragmentgröße von 2 bis 7 µm;
b) Zugabe einer Magnesiumoxid-, Siliciumoxid- und Calciumoxid-Quelle in solchen Mengen, daß der Gehalt an Magnesiumoxid 0,2 bis 2,5 %, an Siliciumdioxid 1 bis 6 % und an Calciumoxid 0,1 bis 2,5 % beträgt, jeweils bezogen auf die Menge an Al₂O₃;
c) Formung eines Grünkörpers; und
d) Sinterung.

2. Keramische Formkörper nach Anspruch 1, dadurch gekennzeichnet, daß man eine Magnesiumoxid-, Siliciumoxid- und Calciumoxid-Quelle in solchen Mengen zugibt, daß der Gehalt an Magnesiumoxid 0,4 bis 1 %, an Siliciumdioxid 2 bis 4 % und an Calciumoxid 0,8 bis 2 % beträgt, jeweils bezogen auf die Menge an Al₂O₃.

3. Keramische Formkörper nach Anspruch 1, dadurch gekennzeichnet, daß zu ihrer Herstellung Talk, Magnesiumoxid, Magnesiumcarbonat oder basisches Magnesiumcarbonat als Quelle für Magnesiumoxid verwendet werden.

4. Keramische Formkörper nach Anspruch 1, dadurch gekennzeichnet, daß zu ihrer Herstellung Wollastonit, Dolomit oder Calciumcarbonat als Quelle für Calciummoxid verwendet werden.

5. Keramische Formkörper nach Anspruch 1, dadurch gekennzeichnet, daß bei der Formgebung des Grünkörpers Kerben angebracht werden.

6. Verwendung der keramischen Formkörper nach einem der Ansprüche 1 bis 5 zur Herstellung von metallisierten Substraten mit einer Zugfestigkeit zwischen Metall und Keramik von ≧ 40 MPa.

7. Verwendung der keramischen Formkörper nach einem der Ansprüche 1 bis 5 zur Herstellung von metallisierten Substraten mit einer Zugfestigkeit zwischen Metall und Keramik von ≧ 50 MPa.
